# EUROPEAN PATENT SPECIFICATION

(11) **EP 3 276 910 B1**
(45) Date of publication and mention of the grant of the patent: **31.07.2019**
(21) Application number: 17152470.5
(22) Date of filing: 20.01.2017
(51) Int. Cl.: H04L 29/06, H04W 12/08, H04W 4/00, H04W 12/06, H04W 84/18

(54) **BLUETOOTH-BASED IDENTITY RECOGNITION METHOD AND DEVICE**
VERFAHREN UND VORRICHTUNG ZUR BLUETOOTH-BASIERTEN IDENTITÄTSERKENNUNG
PROCÉDÉ ET DISPOSITIF DE RECONNAISSANCE D'IDENTITÉ BLUETOOTH

(30) Priority: 29.07.2016 CN 201610617941
(43) Date of publication of application: 31.01.2018
(73) Proprietor: Beijing Xiaomi Mobile Software Co., Ltd., Beijing 100085 (CN)
(72) Inventor: SUN, Yongli, Haidian District, Beijing 100085 (CN); JIA, Weiguang, Haidian District, Beijing 100085 (CN); HOU, Enxing, Haidian District, Beijing 100085 (CN)
(74) Representative: Reeve, Nicholas Edward

(56) References cited:
- EP-A1- 2 566 206
- EP-A1- 2 950 560
- Anonymous: "How Linux Works CTDP Guide Version 0.6.0 June 1, 2000 - Login Process", , 1 June 2000 (2000-06-01), XP055388349, Retrieved from the Internet: URL:http://www.comptechdoc.org/os/linux/ho wlinuxworks/linux_hllogin.html [retrieved on 2017-07-06]
- Anonymous: "Practical Unix and Internet Security - 4.4 Network Account and Authorization Systems", , 5 December 2008 (2008-12-05), XP055388357, Retrieved from the Internet: URL:https://web.archive.org/web/2008120505 3850/http://etutorials.org/Linux+systems/u nix+internet+security/Part+II+Security+Bui lding+Blocks/Chapter+4.+Users+Passwords+an d+Authentication/4.4+Network+Account+and+A uthorization+Systems/ [retrieved on 2017-07-06]
- Anonymous: "Bluetooth Basics - learn.sparkfun.com", , 18 October 2015 (2015-10-18), XP055388746, Retrieved from the Internet: URL:https://web.archive.org/web/2015101811 2633/https://learn.sparkfun.com/tutorials/ bluetooth-basics/all [retrieved on 2017-07-06]

## Description

### TECHNICAL FIELD

The present disclosure generally relates to the technical field of network security, and more particularly, to a BlueTooth (BT)-based identity recognition method and device.

### BACKGROUND

During BT communication between terminals, it is necessary to determine user identities of the opposite ends to determine whether a communication process is secure.

In a related technology, a first terminal establishes a BT connection with a second terminal, the first terminal sends user identity recognition information to the second terminal, the second terminal identifies whether a user identity of the first terminal is authorized/legal according to the recognition information, and if the user identity of the first terminal is legal, the second terminal communicates with the first terminal through the BT connection. EP2566206A1 discloses a method of performing an image forming operation through a user authentication of an image forming apparatus that supports a peer to peer (P2P) connection. EP2950560A1 discloses a function execution system including a function execution device and a communication terminal. In the function execution system, a function execution device may transmit to a communication terminal via a first interface, network information to be used in a particular wireless network.

### SUMMARY

Accordingly, the present disclosure provides a BT-based identity recognition method and device, in accordance with claims which follow.

According to a first aspect of the embodiment of the present disclosure, there is provided a BT-based identity recognition method, which may be applied to BT-enabled smart equipment, the method including that: a BT connection is established with a first terminal; a first user account of the first terminal is acquired through the BT connection; a first preset mapping table is searched for a first Identifier (ID) corresponding to the first user account, the first mapping table including a mapping relationship between at least one user account and at least one ID, each ID corresponding to a respective user account, and the mapping relationship being determined and sent to the smart equipment by a server; and a user identity corresponding to the first terminal is determined according to the first ID.

The first user account of the first terminal is acquired through the BT connection established with the first terminal, and the first preset mapping table is searched for the first ID corresponding to the first user account, the first mapping table including the mapping relationship between the at least one user account and the ID corresponding to each user account and the mapping relationship being determined and sent to the smart equipment by the server; and the user identity corresponding to the first terminal is determined according to the first ID. In this way, the smart equipment communicates with the terminal after recognizing the user identity of the terminal, so that the problem of communication insecurity caused by communication between an illegal terminal and the smart equipment is solved, and the effect of ensuring communication security is achieved.

According to an exemplary embodiment, the first mapping table may include IDs of at least two different levels, the IDs of different levels may correspond to different right information, and the levels of the IDs may have a positive correlation relationship with levels of access rights indicated by the right information.

The IDs of different levels correspond to different right information, and the levels of the IDs have the positive correlation relationship with the levels of the access rights indicated by the right information, so that different access rights are provided for terminals corresponding to different user identities, high-level access rights are set for high-level IDs, and low-level access rights are set for low-level IDs, that is, more functions are provided for a terminal corresponding to a secure user identity, and fewer functions are provided for a terminal corresponding to an insecure user identity; and therefore, communication security is further ensured.

According to an exemplary embodiment, the IDs may be binder IDs or sharer IDs, the binder IDs may be IDs corresponding to terminals which establish a binding relationship with the smart equipment, and the sharer IDs may be IDs corresponding to terminals which establish a sharing relationship with the smart equipment.

The IDs are divided into the binder IDs or the sharer IDs, so that the user identity of the terminal is expanded.

According to an exemplary embodiment, the method may further include that: a second mapping table is searched for first right information corresponding to the first ID, the second mapping table including a mapping relationship between at least one ID and at least one piece of right information, each piece of right information corresponding to a respective ID; and communication is performed with the first terminal through the BT connection according to the first right information.

According to an exemplary embodiment, the method may further include that: a BT connection is established with a second terminal; an equipment ID of the smart equipment is sent to the second terminal through the BT connection so that the second terminal sends the equipment ID, a second user account of the second terminal and a first terminal ID to the server, so as to enable the server to establish a binding relationship among the equipment ID, the second user account and the first terminal ID and to generate a binder ID according to the binding relationship; and the second user account and the binder ID are received from the server, and the second user account and the binder ID are added into the first mapping table as a set of mapping relationship.

According to an exemplary embodiment, the method may further include that:
a third user account of a third terminal and a sharer ID are received from the server, and the third user account and the sharer ID are added into the first mapping table as a set of mapping relationship, the sharer ID being generated by the server according to a sharing relationship among the equipment ID, the third user account and a second terminal ID, herein the server receives the third user account of the third terminal and the equipment ID from the second terminal which establishes the binding relationship with the smart equipment, sends query information to the third terminal according to the third user account, receives the third user account and the second terminal ID from the third terminal which determines to participate in sharing in response to the query information, and establishes the sharing relationship among the equipment ID, the third user account and the second terminal ID.

According to a second aspect of the embodiment of the present disclosure, there is provided a BT-based identity recognition device, which may be applied to BT-enabled smart equipment, the device including: a first establishment module configured to establish a BT connection with a first terminal; an account acquisition module configured to acquire a first user account of the first terminal through the BT connection established by the first establishment module; an ID searching module configured to search a first preset mapping table for a first ID corresponding to the first user account acquired by the account acquisition module, the first mapping table including a mapping relationship between at least one user account and at least one ID, each ID corresponding to a respective user account, and the mapping relationship being determined and sent to the smart equipment by a server; and an identity determination module configured to determine the first ID found by the ID searching module as a user identity corresponding to the first terminal.

The advantages and technical effects of the device according to the invention correspond to those of the method presented above.

According to a particular embodiment, the first mapping table may include IDs of at least two different levels, the IDs of different levels may correspond to different right information, and the levels of the IDs may have a positive correlation relationship with levels of access rights indicated by the right information.

According to a particular embodiment, the IDs may be binder IDs or sharer IDs, the binder IDs may be IDs corresponding to terminals which establish a binding relationship with the smart equipment, and the sharer IDs may be IDs corresponding to terminals which establish a sharing relationship with the smart equipment.

According to a particular embodiment, the device may further include: an information searching module configured to search a second mapping table for first right information corresponding to the first ID, the second mapping table including a mapping relationship between at least one ID and at least one piece of right information, each piece of right information corresponding to a respective ID; and a communication module configured to communicate with the first terminal through the BT connection according to the first right information found by the information searching module.

According to a particular embodiment, the device may further include: a second establishment module configured to establish a BT connection with a second terminal; an ID sending module configured to send an equipment ID of the smart equipment to the second terminal through the BT connection so that the second terminal sends the equipment ID, a second user account of the second terminal and a first terminal ID to the server, so as to enable the server to establish a binding relationship among the equipment ID, the second user account and the first terminal ID and to generate a binder ID according to the binding relationship; and a first addition module configured to receive the second user account and the binder ID from the server, and add the second user account and the binder ID into the first mapping table as a set of mapping relationship.

According to a particular embodiment, the device may further include: a second addition module configured to receive a third user account of a third terminal and a sharer ID from the server, and add the third user account and the sharer ID into the first mapping table as a set of mapping relationship, the sharer ID being generated by the server according to a sharing relationship among the equipment ID, the third user account and a second terminal ID, herein the server receives the third user account of the third terminal and the equipment ID from the second terminal which establishes the binding relationship with the smart equipment, sends query information to the third terminal according to the third user account, receives the third user account and the second terminal ID from the third terminal which determines to participate in sharing in response to the query information, and establishes the sharing relationship among the equipment ID, the third user account and the second terminal ID.

According to a third aspect of the embodiment of the present disclosure, there is provided a BT-based identity recognition device, which may be applied to BT-enabled smart equipment, the device including: a processor; and a memory configured to store instructions executable by the processor, herein the processor may be configured to:

establish a BT connection with a first terminal; acquire a first user account of the first terminal through the BT connection; search a first preset mapping table for a first ID corresponding to the first user account, the first mapping table including a mapping relationship between at least one user account and at least one ID, each ID corresponding to a respective user account, and the mapping relationship being determined and sent to the smart equipment by a server; and determine a user identity corresponding to the first terminal according to the first ID.

In one particular embodiment, the steps of the BT-based identity recognition method are determined by computer program instructions.

Consequently, according to a fourth aspect, the disclosure is also directed to a computer program for executing the steps of the BT-based identity recognition method as described above when this program is executed by a computer.

This program can use any programming language and take the form of source code, object code or a code intermediate between source code and object code, such as a partially compiled form, or any other desirable form.

The disclosure is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general descriptions and following detailed descriptions are exemplary and explanatory only and are not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure.
Fig. 1 is a schematic diagram illustrating an implementation environment involved in each embodiment of the present disclosure.
Fig. 2 is a flow chart showing a BT-based identity recognition method, according to an exemplary embodiment.
Fig. 3 is a flow chart showing a BT-based identity recognition method, according to another exemplary embodiment.
Fig. 4 is a flow chart showing a BT-based identity recognition method, according to another exemplary embodiment.
Fig. 5 is a block diagram of a BT-based identity recognition device, according to an exemplary embodiment.
Fig. 6 is a block diagram of a BT-based identity recognition device, according to an exemplary embodiment.
Fig. 7 is a block diagram of a BT-based identity recognition device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with some aspects related to the present disclosure as recited in the appended claims.

### Implementation environment

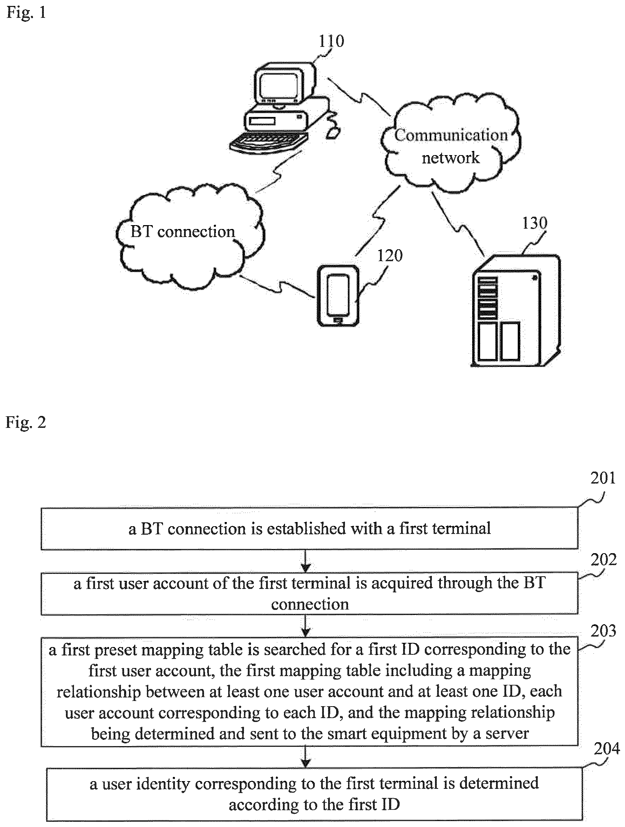

Fig. 1 is a schematic diagram illustrating an implementation environment involved in each embodiment of the present disclosure. The implementation environment includes: a terminal 110, BT-enabled smart equipment 120 and a server 130, herein the terminal 110 establishes a communication connection with the server 130 through a communication network, and the communication network may be a wired network or a wireless network; and the terminal 110 establishes a communication connection with the smart equipment 120 through BT.

The terminal 110 may be electronic equipment with a BT connection function such as a mobile phone, a tablet computer, a portable laptop computer or a desktop computer.

The server 130 may be a server, and may also be a server cluster consisting of a plurality of servers, or a cloud computing serving center.

A Wireless Fidelity (WiFi)-technology-based identity recognition method is provided in the related technology, herein the server 130 determines a relationship between each terminal 110 and the smart equipment 120, and establishes a first mapping table including a mapping relationship between a user account of each terminal 110 and each ID. Then, the terminal 110 establishes a WiFi connection with the smart equipment 120, the smart equipment 120 acquires a user account of the terminal 110, the smart equipment 120 sends the user account to the server 130, the server searches the first mapping table for an ID corresponding to the user account, and sends the found ID to the smart equipment 120, and the smart equipment 120 determines the ID as a user identity corresponding to the terminal 110.

In such an implementation mode, the smart equipment 120 is required to keep a network connection with the server during identity recognition over the terminal 110, and when the smart equipment 120 may not keep the network connection with the server 130, identity recognition over the terminal 110 may not be executed, so that communication with the terminal 110 is insecure; and in addition, more time is consumed by a process that the smart equipment 120 determines the ID of the terminal 110 through the server 130, which may cause lower identity recognition efficiency.

While in the embodiment, the server 130 determines the relationship between each terminal 110 and the smart equipment 120, generates the mapping relationship between the user account of each terminal 110 and each ID, and sends the mapping relationship to the smart equipment 120. Then, the terminal 110 establishes a BT connection with the smart equipment 120, the smart equipment 120 acquires the user account of the terminal 110, and the smart equipment 120 searches the first mapping table established according to the mapping relationship for the ID corresponding to the user account, and determines the ID as the user identity corresponding to the terminal 110.

In the implementation mode provided by the embodiment, the server 130 sends the mapping relationship between the user account of each terminal 110 and each ID to the smart equipment 120 in advance, so that the smart equipment 120 may perform identity recognition on the terminal 110 even when it is impossible to keep the network connection with the server 130; and in addition, less time is consumed by a process that the smart equipment 120 locally determines the ID of the terminal 110, so that identity recognition efficiency is improved.

### Specific implementation mode

Fig. 2 is a flow chart showing a BT-based identity recognition method, according to an exemplary embodiment, the BT-based identity recognition method is applied to the implementation environment shown in Fig. 1, and as shown in Fig. 2, the BT-based identity recognition method includes the following steps:
Step 201: a BT connection is established with a first terminal;
Step 202: a first user account of the first terminal is acquired through the BT connection;
Step 203: a first preset mapping table is searched for a first ID corresponding to the first user account, the first mapping table including a mapping relationship between at least one user account and at least one ID, each ID corresponding to a respective user account, and the mapping relationship being determined and sent to the smart equipment by a server; and
Step 204: a user identity corresponding to the first terminal is determined according to the first ID.

From the above, according to the BT-based identity recognition method provided by the present disclosure, the first user account of the first terminal is acquired through the BT connection established with the first terminal, and the first preset mapping table is searched for the first ID corresponding to the first user account, the first mapping table including the mapping relationship between the at least one user account and the ID corresponding to each user account and the mapping relationship being determined and sent to the smart equipment by the server; and the user identity corresponding to the first terminal is determined according to the first ID. In this way, the smart equipment communicates with the terminal after recognizing the user identity of the terminal, so that the problem of communication insecurity caused by communication between an illegal terminal and the smart equipment is solved, and the effect of ensuring communication security is achieved.

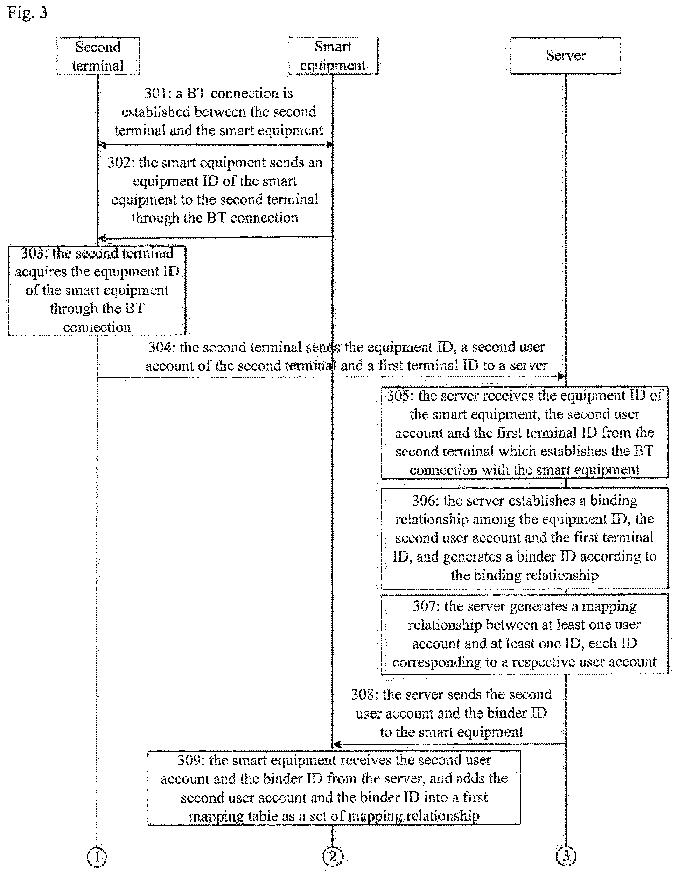

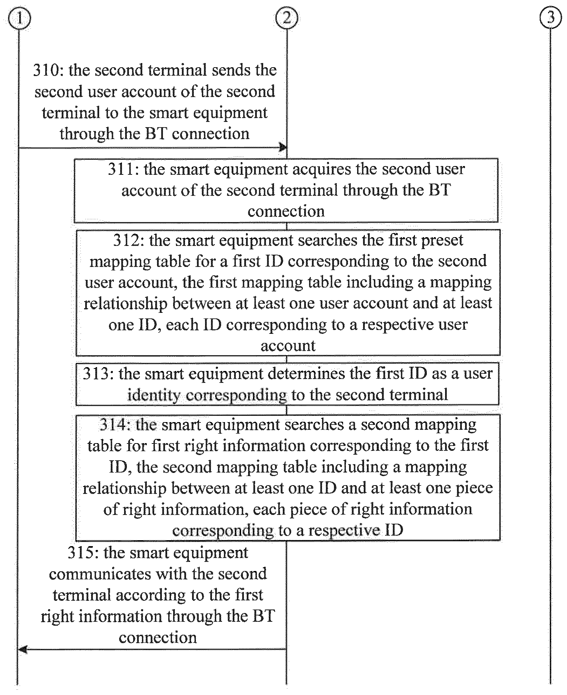

Fig. 3 is a flow chart showing a BT-based identity recognition method, according to another exemplary embodiment. As shown in Fig. 3, descriptions are made with establishment of a binding relationship between a second terminal and smart equipment as an example in the embodiment, and the BT-based identity recognition method includes the following steps.

Step 301: a BT connection is established between a second terminal and smart equipment.

A BT protocol is a wireless technology standard capable of implementing communication between terminals. A connection established between the second terminal and the smart equipment by virtue of the BT protocol is a BT connection.

The step that the BT connection is established between the second terminal and the smart equipment includes that: the second terminal actively establishes the connection with the smart equipment, or the smart equipment actively establishes the BT connection with the second terminal.

In the embodiment, since the second terminal is required to establish the binding relationship with the smart equipment, the second terminal is also required to acquire an equipment ID of the smart equipment, that is, Step 302 is executed.

Step 302: the smart equipment sends an equipment ID of the smart equipment to the second terminal through the BT connection.

The equipment ID of the smart equipment is configured to uniquely identify the smart equipment. In the embodiment, after the second terminal establishes the connection with the smart equipment, the smart equipment may actively send own equipment ID to the second terminal, or, the second terminal sends an ID acquisition request to the smart equipment, and the smart equipment sends own equipment ID to the second terminal according to the ID acquisition request. There are no limits made to a manner for triggering sending of the equipment ID in the embodiment.

During practical implementation, after the second terminal establishes the connection with the smart equipment, the second terminal displays equipment IDs of all smart equipment connected with the terminal in a display interface of a preset client, and displays "bind" controls in areas corresponding to the equipment IDs of unbound smart equipment, and when the second terminal receives triggering operation of a user over a certain "bind" control, the terminal executes Step 303.

Step 303: the second terminal acquires the equipment ID of the smart equipment through the BT connection.

Step 304: the second terminal sends the equipment ID, a second user account of the second terminal and a first terminal ID to a server.

The second user account of the second terminal may be an operating system account for login of the user in the second terminal, may also be an application account for login of the user in an application of the second terminal, may also be an account stored in the second terminal, may further be an ID of the second terminal, and the like, and the second user account is not limited in the embodiment.

The first terminal ID is configured to uniquely identify a terminal, and may be a Media Access Control (MAC) address and the like, which will not be limited in the embodiment.

The second terminal sends the second user account sent to the smart equipment, the acquired equipment ID of the smart equipment and the first terminal ID to the server, herein the server is a server corresponding to the user account. For example, when the user account is an x Millet account, the server is an x Millet server. Therefore, when receiving the second user account, the server may recognize the second user account and establish a relationship between other information and the second user account.

Optionally, the second terminal may also generate a binding request, and adds the equipment ID, the second user account and the first terminal ID into the binding request for sending to the server.

Step 305: the server receives the equipment ID of the smart equipment, the second user account and the first terminal ID from the second terminal which establishes the BT connection with the smart equipment.

Step 306: the server establishes a binding relationship among the equipment ID, the second user account and the first terminal ID, and generates a binder ID according to the binding relationship.

The binder ID is an ID corresponding to the second terminal which establishes a binding relationship with the smart equipment.

The server establishes the binding relationship among the equipment ID, the second user account and the first terminal ID, that is, the server binds the smart equipment identified by the equipment ID and the second terminal corresponding to the second user account.

Then, the server is also required to generate an ID according to the relationship between the second terminal and the smart equipment. Since the relationship between the second terminal and the smart equipment is the binding relationship in the embodiment, the second terminal is also required to generate the binder ID, and determines the binder ID as the ID corresponding to the second terminal. The server stores the equipment ID, the second user account, the first terminal ID and the binder ID.

Herein, the ID may be a character string with a preset bit number, and for example, the preset bit number is 2, the character string of the binder ID may be 11 or 00. There are no limits made in the embodiment.

Step 307: the server generates a mapping relationship between at least one user account and each ID.

After generating the ID of the second terminal, the server is also required to notify the ID to the smart equipment, and at this moment, the server generates the mapping relationship between the ID and the second user account, and sends the mapping relationship to the smart equipment.

Step 308: the server sends the second user account and the binder ID to the smart equipment.

After the second terminal establishes the binding relationship with the smart equipment, the ID of the second terminal is the binder ID, and the server sends the second user account and the binder ID to the smart equipment.

Step 309: the smart equipment receives the second user account and the binder ID from the server, and adds the second user account and the binder ID into a first mapping table as a set of mapping relationship.

The smart equipment adds the second user account and binder ID which are sent by the server into the first mapping table as a set of mapping relationship.

Herein, Step 301 to Step 309 illustrate a process of establishing the binding relationship between the second terminal and the smart equipment. An identity recognition process between the second terminal and the smart equipment is introduced below, and in the process of recognizing an identity of the second terminal, the second terminal is the first terminal in the embodiment shown in Fig. 2 and the second user account is the first user account in the embodiment shown in Fig. 2, herein Step 310 is executed when the BT connection is established between the second terminal and the smart equipment; and when the BT connection is not established between the second terminal and the smart equipment, it is necessary to establish the BT connection between the second terminal and the smart equipment before Step 310.

Step 310: the second terminal sends the second user account of the second terminal to the smart equipment through the BT connection.

In the embodiment, after the second terminal establishes the connection with the smart equipment, the second terminal sends own second user account to the smart equipment.

Step 311: the smart equipment acquires the second user account of the second terminal through the BT connection.

Step 312: the smart equipment searches the first preset mapping table for a first ID corresponding to the second user account, the first mapping table including a mapping relationship between at least one user account and at least one ID, each ID corresponding to a respective user account.

The first mapping table stores the mapping relationship between the at least one user account and the ID corresponding to each user account, the smart equipment searches the first mapping table for a user account which is the same as the second user account according to the acquired second user account, and the first ID corresponding to the user account the same as the second user account in the mapping table is the first ID corresponding to the second user account.

In the embodiment, since the second terminal establishes the binding relationship with the smart equipment, the first ID found by the smart equipment is the binder ID.

Step 313: the smart equipment determines the first ID as a user identity corresponding to the second terminal.

Since the found first ID of the second terminal is the binder ID, the user identity is a binder.

In the embodiment, the smart equipment provides different access rights for terminals corresponding to different user identities, and at this moment, Step 314 is executed. That is, the first mapping table includes the mapping relationship between the at least one user account and the ID corresponding to each user account, and includes IDs of at least two different levels, the IDs of different levels correspond to different right information, and the levels of the IDs have a positive correlation relationship with levels of the access rights indicated by the right information.

Herein, the levels of the IDs are related to security of the user identities, that is, a level of an ID is higher if security of a user identity is higher, and the level of the ID is lower if the security of the user identity is lower. The levels of the access rights are related to the number of functions provided by the smart equipment, that is, the number of functions provided by the smart equipment is larger if a level of an access right is higher, and the number of the functions provided by the smart equipment is smaller if the level of the access right is lower. In such a manner, the smart equipment provides more functions for a terminal corresponding to a secure user identity, and provides fewer functions for a terminal corresponding to an insecure user identity, so that communication security is further ensured.

Step 314: the smart equipment searches a second mapping table for first right information corresponding to the first ID, the second mapping table including a mapping relationship between at least one ID and at least one piece of right information, each piece of right information corresponding to a respective ID.

The second mapping table includes the mapping relationship between the at least one ID and the right information corresponding to each ID. The right information is configured to indicate an access right over the smart equipment.

For example, when the first ID is a binder, the corresponding first right information corresponds to all functions provided by the smart equipment.

Step 315: the smart equipment communicates with the second terminal according to the first right information through the BT connection.

When the first right information found from the second mapping table by the smart equipment and corresponding to the binder ID corresponds to all the functions provided by the smart equipment, the second terminal determines that all the functions of the smart equipment may be called.

For example, the second terminal may be a mobile phone of a user, the smart equipment may be a printer in a house of the user, the mobile phone displays the printer connected with the mobile phone on an interface and displays a "bind" button for binding with the printer after the mobile phone establishes a BT connection with the printer, and when the user clicks the "bind" button, the mobile phone acquires a printer ID from the printer, the printer sends the printer ID to the mobile phone, the mobile phone sends own user account, a mobile phone ID and the printer ID to the server, the server establishes a binding relationship among the user account, the mobile phone ID and the printer ID, and generates a binder ID corresponding to the mobile phone which establishes the binding relationship with the printer according to the binding relationship, the server generates a mapping relationship between the binder ID and the user account, and sends the mapping relationship to the printer, and the printer adds the user account of the mobile phone and the binder ID into a first mapping table. At this point, the mobile phone establishes the binding relationship with the printer.

In a using process, after the mobile phone establishes the BT connection with the printer, the mobile phone sends own user account to the printer, the printer searches the first preset mapping table for a user account the same as the received user account, an ID corresponding to the found user account being the binder ID, and the printer confirms that a user identity of the mobile phone is a binder.

From the above, according to the BT-based identity recognition method provided by the present disclosure, the first user account of the first terminal is acquired through the BT connection established with the first terminal, and the first preset mapping table is searched for the first ID corresponding to the first user account, the first mapping table including the mapping relationship between the at least one user account and the ID corresponding to each user account and the mapping relationship being determined and sent to the smart equipment by the server; and the user identity corresponding to the first terminal is determined according to the first ID. In this way, the smart equipment communicates with the terminal after recognizing the user identity of the terminal, so that the problem of communication insecurity caused by communication between an illegal terminal and the smart equipment is solved, and the effect of ensuring communication security is achieved.

The IDs are divided into the binder IDs or the sharer IDs, so that the user identity of the terminal is expanded.

The IDs of different levels correspond to different right information, and the levels of the IDs have the positive correlation relationship with the levels of the access rights indicated by the right information, so that different access rights are provided for terminals corresponding to different user identities, high-level access rights are set for high-level IDs, and low-level access rights are set for low-level IDs, that is, more functions are provided for a terminal corresponding to a secure user identity, and fewer functions are provided for a terminal corresponding to an insecure user identity; and therefore, communication security is further ensured.

After the second terminal establishes the binding relationship with the smart equipment, the second terminal may further share the smart equipment to a third terminal for the third terminal to establish a sharing relationship with the smart equipment.

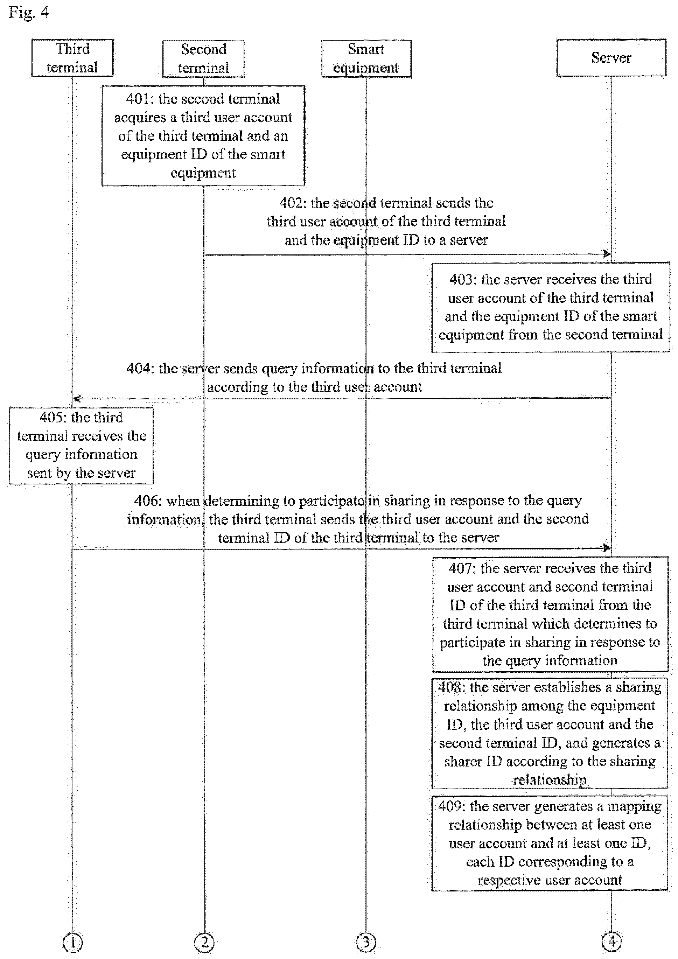

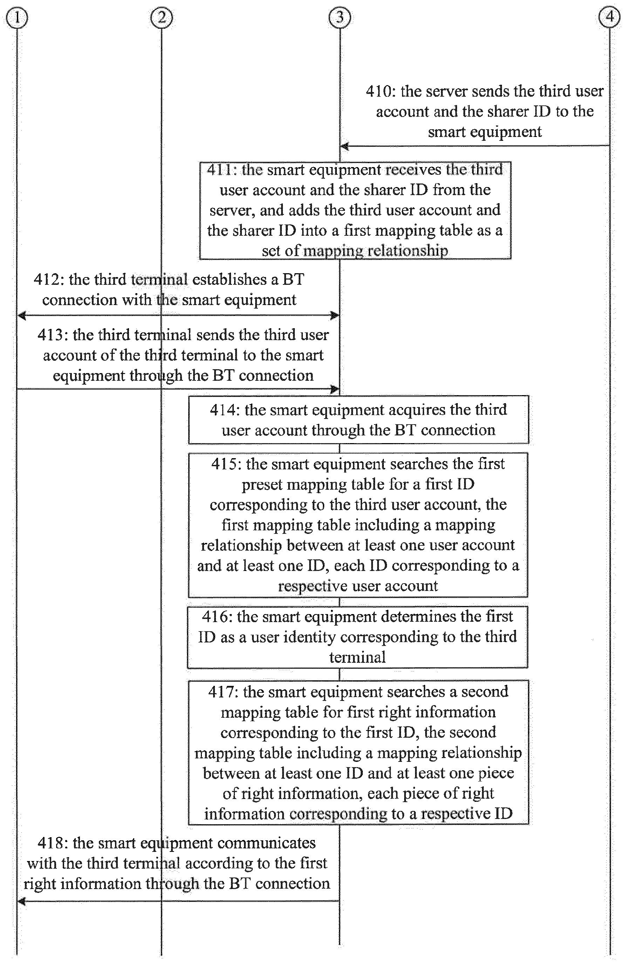

Fig. 4 is a flow chart showing a BT-based identity recognition method, according to another exemplary embodiment. As shown in Fig. 4, descriptions are made with establishment of a sharing relationship between a third terminal and smart equipment as an example in the embodiment, and the BT-based identity recognition method includes the following steps.

Step 401: a second terminal acquires a third user account of a third terminal and an equipment ID of smart equipment.

In the embodiment, the second terminal is a terminal which establishes a binding relationship with the smart equipment, and the third terminal refers to a terminal which confirms to participate in sharing after the second terminal establishing the binding relationship with the smart equipment shares the smart equipment to each terminal. For example, after terminal 1 is bound with the smart equipment, terminal 1 shares the smart equipment to terminal 2, and if terminal 2 confirms to participate in sharing, terminal 2 is the third terminal.

The third user account of the third terminal may be an operating system account for login of a user in the third terminal, may also be an application account for login of the user in an application of the third terminal, may also be an account stored in the third terminal, may further be an ID of the third terminal, and the like, and the third user account is not limited in the embodiment.

During practical implementation, after the terminal establishes the binding relationship with the smart equipment, the second terminal displays an interface of sharing the smart equipment in a display interface of a preset client, and when the second terminal receives the third user account, input in an input box of the interface by the user, of the third terminal and triggering operation of the user over a "share" control, the second terminal reads the equipment ID, acquired in a binding relationship establishment process, of the smart equipment, and then executes Step 402.

Step 402: the second terminal sends the third user account of the third terminal and the equipment ID to a server.

The second terminal sends the third user account, sent to the smart equipment, of the third terminal and the acquired equipment ID of the smart equipment to the server, herein the server is a server corresponding to the user account. For example, when the user account is an x Millet account, the server is an x Millet server. Therefore, when receiving the third user account, the server may recognize the third user account and establish a relationship between other information and the third user account.

Optionally, the second terminal may also generate a sharing request, and adds the equipment ID and the third user account into the sharing request for sending to the server.

Sep 403: the server receives the third user account of the third terminal and the equipment ID of the smart equipment from the second terminal.

Step 404: the server sends query information to the third terminal according to the third user account.

The query information is configured to query about whether the third terminal confirms to participate in sharing, herein the query information at least includes the equipment ID of the smart equipment and a second terminal ID of the third terminal.

Step 405: the third terminal receives the query information sent by the server.

Step 406: when determining to participate in sharing according to the query information, the third terminal sends the third user account and the second terminal ID of the third terminal to the server.

The third terminal displays the received query information, and displays an "OK" control and a "cancel" control, and when receiving triggering operation of the user over the "OK" control, the third terminal determines to participate in sharing, and sends the third user account and the second terminal ID of the third terminal to the server; and when receiving triggering operation of the user over the "cancel" control, the third terminal determines not to participate in sharing, and the flow ends.

Step 407: the server receives the third user account and second terminal ID of the third terminal which are sent by the third terminal after determining to participate in sharing according to the query information.

Step 408: the server establishes a sharing relationship among the equipment ID, the third user account and the second terminal ID, and generates a sharer ID according to the sharing relationship.

The sharer ID refers to an ID corresponding to the third terminal which establishes the sharing relationship with the smart equipment.

The server establishes the sharing relationship among the equipment ID, the third user account and the second terminal ID.

Then, the server is also required to generate an ID according to the relationship between the third terminal and the smart equipment. Since the relationship between the third terminal and the smart equipment is the sharing relationship in the embodiment, the server is also required to generate the sharer ID, and determines the sharer ID as the ID corresponding to the third terminal. The server stores the equipment ID, the second user account, the second terminal ID and the sharer ID.

Step 409: the server generates a mapping relationship between at least one user account and at least one ID, each ID corresponding to a respective user account.

In the embodiment, the ID is the sharer ID.

Step 410: the server sends the third user account and the sharer ID to the smart equipment.

After generating the ID of the third terminal, the server is also required to notify the ID to the smart equipment, and at this moment, the server generates the mapping relationship between the ID and the third user account, and sends the mapping relationship to the smart equipment.

Step 411: the smart equipment receives the third user account and the sharer ID from the server, and adds the third user account and the sharer ID into a first mapping table as a set of mapping relationship.

The first mapping table includes the mapping relationship between the at least one user account and the ID corresponding to each user account. The smart equipment adds the third user account and sharer ID which are sent by the server into the first mapping table.

Herein, Step 401 to Step 411 illustrate a process of establishing the sharing relationship between the third terminal and the smart equipment. An identity recognition process between the third terminal and the smart equipment is introduced below, and in the process of recognizing an identity of the third terminal, the third terminal is the first terminal in the embodiment shown in Fig. 2 and the second user account is the first user account in the embodiment shown in Fig. 2.

Step 412: the third terminal establishes a BT connection with the smart equipment.

Step 413: the third terminal sends the third user account of the third terminal to the smart equipment through the BT connection.

In the embodiment, after the third terminal establishes the connection with the smart equipment, the second terminal sends own third user account to the smart equipment.

Step 414: the smart equipment acquires the third user account through the BT connection.

Step 415: the smart equipment searches the first preset mapping table for a first ID corresponding to the third user account, the first mapping table including a mapping relationship between at least one user account and at least one ID, each ID corresponding to a respective user account.

In the embodiment, since the third terminal establishes the sharing relationship with the smart equipment, the first ID found by the smart equipment is the sharer ID.

Step 416: the smart equipment determines the first ID as a user identity corresponding to the third terminal.

Since the found first ID of the third terminal is the sharer ID, the user identity is a sharer.

In the embodiment, the smart equipment provides different access rights for terminals corresponding to different user identities, and at this moment, Step 417 is executed. That is, the first mapping table includes the mapping relationship between the at least one user account and the ID corresponding to each user account, and includes IDs of at least two different levels, the IDs of different levels correspond to different right information, and the levels of the IDs have a positive correlation relationship with levels of the access rights indicated by the right information.

Herein, the levels of the IDs are related to security of the user identities, that is, a level of an ID is higher if security of a user identity is higher, and the level of the ID is lower if the security of the user identity is lower. The levels of the access rights are related to the number of functions provided by the smart equipment, that is, the number of functions provided by the smart equipment is larger if a level of an access right is higher, and the number of the functions provided by the smart equipment is smaller if the level of the access right is lower. In such a manner, the smart equipment provides more functions for a terminal corresponding to a secure user identity, and provides fewer functions for a terminal corresponding to an insecure user identity, so that communication security is further ensured.

Step 417: the smart equipment searches a second mapping table for first right information corresponding to the first ID, the second mapping table including a mapping relationship between at least one ID and at least one piece of right information, each piece of right information corresponding to a respective ID.

The second mapping table includes the mapping relationship between the at least one ID and the right information corresponding to each ID. The right information is configured to indicate an access right over the smart equipment.

For example, when the first ID is a sharer, the corresponding first right information corresponds to part of functions provided by the smart equipment.

Step 418: the smart equipment communicates with the third terminal according to the first right information through the BT connection.

When the first right information found from the second mapping table by the smart equipment and corresponding to the sharer ID corresponds to part of the functions provided by the smart equipment, the third terminal determines that part of the functions of the smart equipment may be called.

For example, the third terminal is a mobile phone of a family member in a family, and the smart equipment is a printer. Mobile phone a of member a establishes a binding relationship with the printer, and when member a shares the printer to another family member b, member a inputs a user account of member b in mobile phone a, and sends the user account of member b and a printer ID to the server, the server receives the user account of member b and the printer ID, and sends query information to mobile phone b of member b according to the user account of member b, member b sends the user account of member b a mobile phone ID of mobile phone b and the printer ID to the server through mobile phone b when confirming to participate in sharing, the server establishes a sharing relationship among the user account of member b, the mobile phone ID of mobile phone b and the printer ID, and generates a sharer ID corresponding to mobile phone b, the server generates mapping between the sharer ID and the user account, and sends the mapping to the printer, and the printer adds the user account of member b and the sharer ID into a first mapping table. At this point, the mobile phone participating in sharing establishes the sharing relationship with the printer.

In a using process, after mobile phone b establishes a BT connection with the printer, mobile phone b sends own user account to the printer, the printer searches the first preset mapping table for a user account the same as the received user account, an ID corresponding to the found user account being the sharer ID, and the printer confirms that a user identity of the mobile phone is a sharer.

Optionally, when there exists no ID corresponding to the user account of the terminal in the first mapping table, the smart equipment determines that the user identity of the terminal is a stranger, and an access right corresponding to the ID of the stranger is of the lowest level.

From the above, according to the BT-based identity recognition method provided by the present disclosure, the first user account of the first terminal is acquired through the BT connection established with the first terminal, and the first preset mapping table is searched for the first ID corresponding to the first user account, the first mapping table including the mapping relationship between the at least one user account and the ID corresponding to each user account and the mapping relationship being determined and sent to the smart equipment by the server; and the user identity corresponding to the first terminal is determined according to the first ID. In this way, the smart equipment communicates with the terminal after recognizing the user identity of the terminal, so that the problem of communication insecurity caused by communication between an illegal terminal and the smart equipment is solved, and the effect of ensuring communication security is achieved.

The IDs are divided into the binder IDs or the sharer IDs, so that the user identity of the terminal is expanded.

The IDs of different levels correspond to different right information, and the levels of the IDs have the positive correlation relationship with the levels of the access rights indicated by the right information, so that different access rights are provided for terminals corresponding to different user identities, high-level access rights are set for high-level IDs, and low-level access rights are set for low-level IDs, that is, more functions are provided for a terminal corresponding to a secure user identity, and fewer functions are provided for a terminal corresponding to an insecure user identity; and therefore, communication security is further ensured.

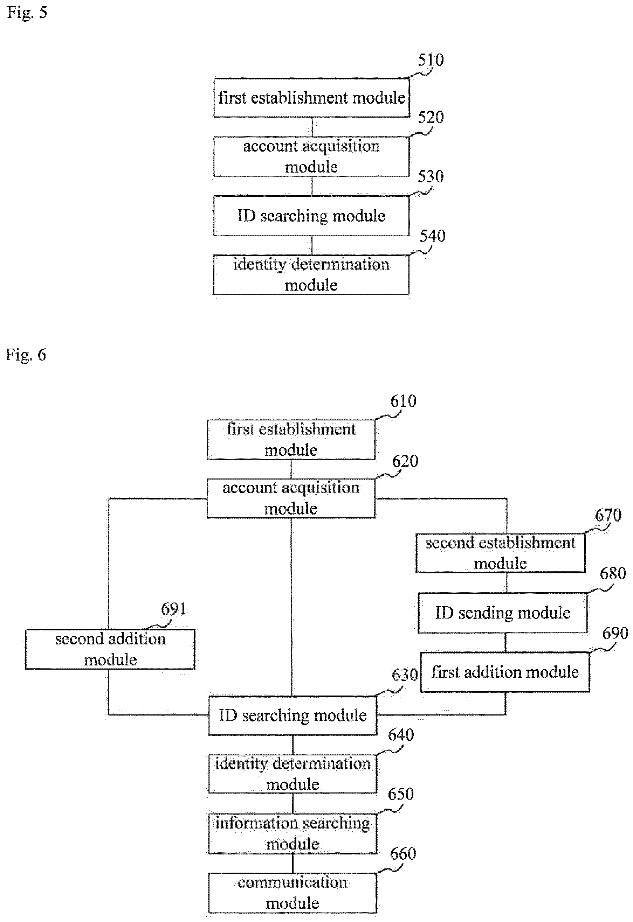

Fig. 5 is a block diagram of a BT-based identity recognition device, according to an exemplary embodiment, the BT-based identity recognition device is applied to BT-enabled smart equipment, and as shown in Fig. 5, the BT-based identity recognition device includes: a first establishment module 510, an account acquisition module 520, an ID searching module 530 and an identity determination module 540; the first establishment module 510 is configured to establish a BT connection with a first terminal; the account acquisition module 520 is configured to acquire a first user account of the first terminal through the BT connection established by the first establishment module 510; the ID searching module 530 is configured to search a first preset mapping table for a first ID corresponding to the first user account acquired by the account acquisition module 520, the first mapping table including a mapping relationship between at least one user account and at least one ID, each ID corresponding to a respective user account, and the mapping relationship being determined and sent to the smart equipment by a server; and the identity determination module 540 is configured to determine the first ID found by the ID searching module 530 as a user identity corresponding to the first terminal.

From the above, according to the BT-based identity recognition device provided by the present disclosure, the first user account of the first terminal is acquired through the BT connection established with the first terminal, and the first preset mapping table is searched for the first ID corresponding to the first user account, the first mapping table including the mapping relationship between the at least one user account and the ID corresponding to each user account and the mapping relationship being determined and sent to the smart equipment by the server; and the user identity corresponding to the first terminal is determined according to the first ID. In this way, the smart equipment communicates with the terminal after recognizing the user identity of the terminal, so that the problem of communication insecurity caused by communication between an illegal terminal and the smart equipment is solved, and the effect of ensuring communication security is achieved.

Fig. 6 is a block diagram of a BT-based identity recognition device, according to an exemplary embodiment, the BT-based identity recognition device is applied to BT-enabled smart equipment, and as shown in Fig. 6, the BT-based identity recognition device includes: a first establishment module 610, an account acquisition module 620, an ID searching module 630 and an identity determination module 640; the first establishment module 610 is configured to establish a BT connection with a first terminal; the account acquisition module 620 is configured to acquire a first user account of the first terminal through the BT connection established by the first establishment module 610; the ID searching module 630 is configured to search a first preset mapping table for a first ID corresponding to the first user account acquired by the account acquisition module 620, the first mapping table including a mapping relationship between at least one user account and at least one ID, each ID corresponding to a respective user account, and the mapping relationship being determined and sent to the smart equipment by a server; and the identity determination module 640 is configured to determine the first ID found by the ID searching module 630 as a user identity corresponding to the first terminal.

Optionally, the first mapping table includes IDs of at least two different levels,
the IDs of different levels correspond to different right information, and the levels of the IDs have a positive correlation relationship with levels of access rights indicated by the right information.

Optionally, the IDs are binder IDs or sharer IDs, the binder IDs are IDs corresponding to terminals which establish a binding relationship with the smart equipment, and the sharer IDs are IDs corresponding to terminals which establish a sharing relationship with the smart equipment.

Optionally, the device further includes: an information searching module 650 and a communication module 660; the information searching module 650 is configured to search a second mapping table for first right information corresponding to the first ID, the second mapping table including a mapping relationship between at least one ID and at least one piece of right information, each piece of right information corresponding to a respective ID; and the communication module 660 is configured to communicate with the first terminal through the BT connection according to the first right information found by the information searching module 660.

Optionally, the device further includes: a second establishment module 670, an ID sending module 680 and a first addition module 690; the second establishment module 670 is configured to establish a BT connection with a second terminal; the ID sending module 680 is configured to send an equipment ID of the smart equipment to the second terminal through the BT connection so that the second terminal sends the equipment ID, a second user account of the second terminal and a first terminal ID to the server, so as to enable the server to establish a binding relationship among the equipment ID, the second user account and the first terminal ID and to generate a binder ID according to the binding relationship; and the first addition module 690 is configured to receive the second user account and the binder ID from the server, and add the second user account and the binder ID into the first mapping table as a set of mapping relationship.

Optionally, the device further includes: a second addition module 691; and the second addition module 691 is configured to receive a third user account of a third terminal and a sharer ID from the server, and add the third user account and the sharer ID into the first mapping table as a set of mapping relationship, the sharer ID being generated by the server according to a sharing relationship among the equipment ID, the third user account and a second terminal ID, herein the server receives the third user account of the third terminal and the equipment ID from the second terminal which establishes the binding relationship with the smart equipment, sends query information to the third terminal according to the third user account, receives the third user account and the second terminal ID from the third terminal which determines to participate in sharing according to the query information, and establishes the sharing relationship among the equipment ID, the third user account and the second terminal ID.

From the above, according to the BT-based identity recognition method provided by the present disclosure, the first user account of the first terminal is acquired through the BT connection established with the first terminal, and the first preset mapping table is searched for the first ID corresponding to the first user account, the first mapping table including the mapping relationship between the at least one user account and the ID corresponding to each user account and the mapping relationship being determined and sent to the smart equipment by the server; and the user identity corresponding to the first terminal is determined according to the first ID. In this way, the smart equipment communicates with the terminal after recognizing the user identity of the terminal, so that the problem of communication insecurity caused by communication between an illegal terminal and the smart equipment is solved, and the effect of ensuring communication security is achieved.

The IDs are divided into the binder IDs or the sharer IDs, so that the user identity of the terminal is expanded.

The IDs of different levels correspond to different right information, and the levels of the IDs have the positive correlation relationship with the levels of the access rights indicated by the right information, so that different access rights are provided for terminals corresponding to different user identities, high-level access rights are set for high-level IDs, and low-level access rights are set for low-level IDs, that is, more functions are provided for a terminal corresponding to a secure user identity, and fewer functions are provided for a terminal corresponding to an insecure user identity; and therefore, communication security is further ensured.

An exemplary embodiment of the present disclosure provides a BT-based identity recognition device, which may implement a BT-based identity recognition method provided by the present disclosure and is applied to BT-enabled smart equipment, and the BT-based identity recognition device includes: a processor and a memory configured to store instructions executable by the processor, herein the processor is configured to: establish a BT connection with a first terminal; acquire a first user account of the first terminal through the BT connection; search a first preset mapping table for a first ID corresponding to the first user account, the first mapping table including a mapping relationship between at least one user account and at least one ID, each ID corresponding to a respective user account, and the mapping relationship being determined and sent to the smart equipment by a server; and determine a user identity corresponding to the first terminal according to the first ID.

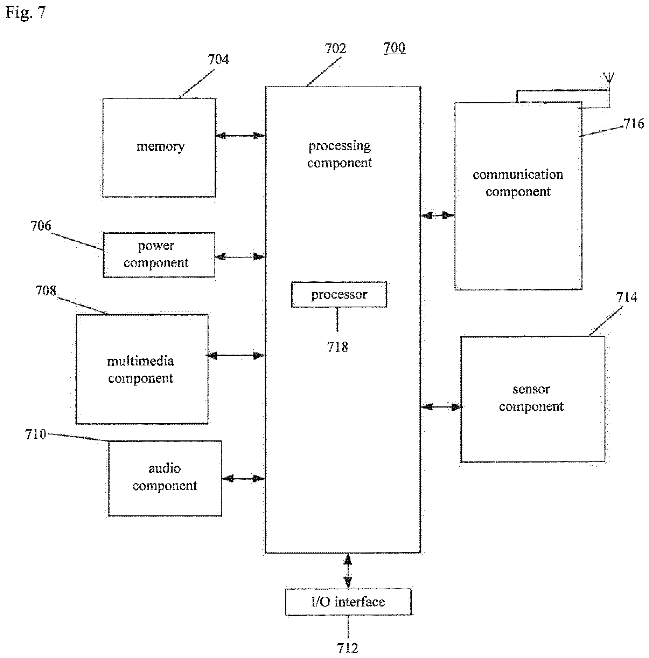

Fig. 7 is a block diagram of a BT-based identity recognition device 700, according to an exemplary embodiment. For example, the device 700 may be a mobile phone, a computer, a digital broadcast terminal, a messaging device, a gaming console, a tablet, a medical device, exercise equipment, a personal digital assistant and the like.

Referring to Fig. 7, the device 700 may include one or more of the following components: a processing component 702, a memory 704, a power component 706, a multimedia component 708, an audio component 710, an Input/Output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 718 to execute instructions to perform all or part of the steps in the abovementioned method. Moreover, the processing component 702 may include one or more modules which facilitate interaction between the processing component 702 and the other components. For instance, the processing component 702 may include a multimedia module to facilitate interaction between the multimedia component 708 and the processing component 702.

The memory 704 is configured to store various types of data to support the operation of the device 700. Examples of such data include instructions for any application programs or methods operated on the device 700, contact data, phonebook data, messages, pictures, video, etc. The memory 704 may be implemented by any type of volatile or nonvolatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 706 provides power for various components of the device 700. The power component 706 may include a power management system, one or more power supplies, and other components associated with the generation, management and distribution of power for the device 700.

The multimedia component 708 includes a screen providing an output interface between the device 700 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 708 includes a front camera and/or a rear camera. The front camera and/or the rear camera may receive external multimedia data when the device 700 is in an operation mode, such as a photographing mode or a video mode. Each of the front camera and the rear camera may be a fixed optical lens system or have focusing and optical zooming capabilities.

The audio component 710 is configured to output and/or input an audio signal. For example, the audio component 710 includes a Microphone (MIC), and the MIC is configured to receive an external audio signal when the device 700 is in the operation mode, such as a call mode, a recording mode and a voice recognition mode. The received audio signal may be further stored in the memory 704 or sent through the communication component 716. In some embodiments, the audio component 710 further includes a speaker configured to output the audio signal.

The I/O interface 712 provides an interface between the processing component 702 and a peripheral interface module, and the peripheral interface module may be a keyboard, a click wheel, a button and the like. The button may include, but not limited to: a home button, a volume button, a starting button and a locking button.

The sensor component 714 includes one or more sensors configured to provide status assessment in various aspects for the device 700. For instance, the sensor component 714 may detect an on/off status of the device 700 and relative positioning of components, such as a display and small keyboard of the device 700, and the sensor component 714 may further detect a change in a position of the device 700 or a component of the device 700, presence or absence of contact between the user and the device 700, orientation or acceleration/deceleration of the device 700 and a change in temperature of the device 700. The sensor component 714 may include a proximity sensor configured to detect presence of an object nearby without any physical contact. The sensor component 714 may also include a light sensor, such as a Complementary Metal Oxide Semiconductor (CMOS) or Charge Coupled Device (CCD) image sensor configured for use in an imaging application. In some embodiments, the sensor component 714 may also include an acceleration sensor, a gyroscope sensor, a magnetic sensor, a pressure sensor or a temperature sensor.

The communication component 716 is configured to facilitate wired or wireless communication between the device 700 and another device. The device 700 may access a BT-technology-based wireless network, or access a wireless network based on another communication standard, such as Wi-Fi, 2nd-Generation (2G) or 3rd-Generation (3G) or a combination thereof. In an exemplary embodiment, the communication component 716 receives a broadcast signal or broadcast associated information from an external broadcast management system through a broadcast channel. In an exemplary embodiment, the communication component 716 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology and another technology.

In an exemplary embodiment, the device 700 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including an instruction, such as the memory 704 including an instruction, and the instruction may be executed by the processor 718 of the device 700 to implement the abovementioned method. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A BlueTooth-based, abbreviated as BT-based, identity recognition method, **characterized in that**, the method comprises:
establishing (301), by a smart equipment, a BT connection with a first terminal;
sending (302), by the smart equipment, an equipment ID of the BT-enabled smart equipment to the first terminal through the BT connection;
sending (304), by the first terminal, the equipment ID, a first user account of the first terminal and a first terminal ID to a server;
establishing (306), by the server, a binding relationship among the equipment ID, the first user account and the first terminal ID and generating a binder ID according to the binding relationship; and
receiving (309), by the smart equipment, the first user account and the binder ID from the server, and adding the first user account and the binder ID into a first preset mapping table as a set of mapping relationship, and the first preset mapping table comprising a mapping relationship between at least one user account and at least one binder ID, each binder ID corresponding to a respective user account; and
searching (312), by the smart equipment, the preset mapping table for the binder ID corresponding to the first user account; and
determining (313), by the smart equipment, a user identity corresponding to the first terminal according to the binder ID.

2. The method according to claim 1, wherein the first preset mapping table comprises the binder IDs and sharer IDs of at least two different levels,
the binder IDs and the sharer IDs of different levels correspond to different right information, and the levels of the binder IDs and the sharer IDs have a positive correlation relationship with levels of access rights indicated by the right information.

3. The method according to claim 2, wherein the binder IDs are IDs corresponding to terminals which establish a binding relationship with the smart equipment, and the sharer IDs are IDs corresponding to terminals which establish a sharing relationship with the smart equipment.

4. The method according to claim 2 or 3, further comprising:
searching (314), by the smart equipment, a second preset mapping table for first right information corresponding to the binder ID, the second preset mapping table comprising a mapping relationship between at least one binder ID and at least one piece of right information, each piece of right information corresponding to a respective binder ID; and
communicating (315), by the smart equipment, with the first terminal through the BT connection according to the first right information.

5. The method according to claim 4, further comprising:
receiving (411), by the smart equipment, a third user account of a third terminal and a sharer ID from the server, and adding the third user account and the sharer ID into the first preset mapping table as a set of mapping relationship, the sharer ID being generated by the server according to a sharing relationship among the equipment ID, the third user account and a first terminal ID, wherein the server receives the third user account of the third terminal and the equipment ID from the second terminal which establishes the binding relationship with the smart equipment, sends query information to the third terminal according to the third user account, receives the third user account and the first terminal ID from the third terminal which determines to participate in sharing in response to the query information, and establishes the sharing relationship among the equipment ID, the third user account and the first terminal ID.

6. A BlueTooth-based, abbreviated as BT-based, identity recognition device, applied to BT-enabled smart equipment, **characterized in that**, the device comprises:
a first establishment module (670) configured to establish a BT connection with a first terminal;
an ID sending module (680) configured to send an equipment ID of the smart equipment to the first terminal through the BT connection so that the first terminal sends the equipment ID, a first user account of the first terminal and a first terminal ID to a server, so as to enable the server to establish a binding relationship among the equipment ID, the first user account and the first terminal ID and to generate a binder ID according to the binding relationship; and
a first addition module (690) configured to receive the first user account and the binder ID from the server, and add the first user account and the binder ID into a first preset mapping table as a set of mapping relationship, and the first preset mapping table comprising a mapping relationship between at least one user account and at least one binder ID, each binder ID corresponding to a respective user account;
an ID searching module (630) configured to search the first preset mapping table for the binder ID corresponding to the first user account received by the first addition module; and
an identity determination module (640) configured to determine a user identity corresponding to the first terminal according to the first ID found by the ID searching module .

7. The device according to claim 6, wherein the first preset mapping table comprises the binder IDs and sharer IDs of at least two different levels,
the binder IDs and the sharer IDs of different levels correspond to different right information, and the levels of the binder IDs and the sharer IDs have a positive correlation relationship with levels of access rights indicated by the right information.

8. The device according to claim 7, wherein the binder IDs are IDs corresponding to terminals which establish a binding relationship with the smart equipment, and the sharer IDs are IDs corresponding to terminals which establish a sharing relationship with the smart equipment.

9. The device according to claim 6, further comprising:
an information searching module (650) configured to search a second preset mapping table for first right information corresponding to the binder ID, the second preset mapping table comprising a mapping relationship between at least one binder ID and at least one piece of right information, each piece of right information corresponding to a respective binder ID; and
a communication module (660) configured to communicate with the first terminal through the BT connection according to the first right information found by the information searching module.

10. The device according to claim 9, further comprising:
a second addition module (691) configured to receive a third user account of a third terminal and a sharer ID from the server, and add the third user account and the sharer ID into the first preset mapping table as a set of mapping relationship, the sharer ID being generated by the server according to a sharing relationship among the equipment ID, the third user account and a first terminal ID, wherein the server receives the third user account of the third terminal and the equipment ID from the first terminal which establishes the binding relationship with the smart equipment, sends query information to the third terminal according to the third user account, receives the third user account and the first terminal ID from the third terminal which determines to participate in sharing in response to the query information, and establishes the sharing relationship among the equipment ID, the third user account and the first terminal ID.

11. A BlueTooth-based, abbreviated as BT-based, identity recognition device, applied to BT-enabled smart equipment, **characterized in that**, the device comprises:
a processor (702); and
a memory (704) configured to store instructions executable by the processor, wherein the processor is configured to:
establish a BT connection with a first terminal;
send an equipment ID of the BT-enabled smart equipment to the first terminal through the BT connection so that the first terminal sends the equipment ID, a first user account of the first terminal and a first terminal ID to the server, so as to enable the server to establish a binding relationship among the equipment ID, the first user account and the first terminal ID and to generate a binder ID according to the binding relationship; and
receive the first user account and the binder ID from the server, and adding the first user account and the binder ID into a first preset mapping table as a set of mapping relationship, and the first preset mapping table comprising a mapping relationship between at least one user account and at least one binder ID, each binder ID corresponding to a respective user account; and
search the preset mapping table for the binder ID corresponding to the first user account; and
determine a user identity corresponding to the first terminal according to the binder ID.

12. A computer program including instructions for executing the steps of a BlueTooth -based, abbreviated as BT-based, identity recognition method according to any one of claims 1 to 5 when said program is executed by a computer.

13. A recording medium readable by a computer and having recorded thereon a computer program including instructions for executing the steps of a BlueTooth-based, abbreviated as BT-based, identity recognition method according to any one of claims 1 to 5.

## Patentansprüche

1. BlueTooth-gestütztes, abgekürzt als BT-gestütztes, Identitätserkennungsverfahren, **dadurch gekennzeichnet, dass** das Verfahren Folgendes aufweist:
durch ein Smartgerät Herstellen (301) einer BT-Verbindung mit einem ersten Endgerät;
durch das Smartgerät Senden (302) einer Geräte-ID des BT-fähigen Smartgeräts an das erste Endgerät durch die BT-Verbindung;
durch das erste Endgerät Senden (304) der Geräte-ID, eines ersten Benutzerkontos des ersten Endgeräts und einer ersten Endgerät-ID an einen Server;
durch den Server Herstellen (306) einer Kopplungsbeziehung unter der Geräte-ID, dem ersten Benutzerkonto und der ersten Endgerät-ID und Erzeugen einer Koppler-ID gemäß der Kopplungsbeziehung; und
durch das Smartgerät Empfangen (309) des ersten Benutzerkontos und der Koppler-ID vom Sender und Einfügen des ersten Benutzerkontos und der Koppler-ID in eine erste voreingestellte Zuordnungstabelle als ein Zuordnungsbeziehungssatz und wobei die erste voreingestellte Zuordnungstabelle eine Zuordnungsbeziehung zwischen wenigstens einem Benutzerkonto und wenigstens einer Koppler-ID aufweist, wobei jede Koppler-ID einem jeweiligen Benutzerkonto entspricht; und
durch das Smartgerät Durchsuchen (312) der voreingestellten Zuordnungstabelle nach der Koppler-ID, die dem ersten Benutzerkonto entspricht; und
durch das Smartgerät Bestimmen (313) einer Benutzeridentität, die dem ersten Endgerät entspricht, gemäß der Koppler-ID.

2. Verfahren nach Anspruch 1, wobei die erste voreingestellte Zuordnungstabelle die Koppler-ID und die Beteiliger-ID von wenigstens zwei verschiedenen Ebenen aufweist,
die Koppler-ID und die Beteiliger-ID verschiedener Ebenen verschiedenen Rechtsinformationen entsprechen und die Ebenen der Koppler-ID und der Beteiliger-ID eine positive Korrelationsbeziehung mit Ebenen von Zugangsrechten, die durch die Rechtsinformationen angezeigt werden, haben.

3. Verfahren nach Anspruch 2, wobei die Koppler-ID Kennungen (ID) sind, die Endgeräten entsprechen, die eine Kopplungsbeziehung mit dem Smartgerät herstellen, und die Beteiliger-ID Kennungen (ID) sind, die Endgeräten entsprechen, die eine Beteiligungsbeziehung mit dem Smartgerät herstellen.

4. Verfahren nach Anspruch 2 oder 3, das ferner aufweist:
durch das Smartgerät Durchsuchen (314) einer zweiten voreingestellten Zuordnungstabelle nach ersten Rechtsinformationen, die der Koppler-ID entsprechen, wobei die zweite voreingestellte Zuordnungstabelle eine Zuordnungsbeziehung zwischen wenigstens einer Koppler-ID und wenigstens einer Rechtsinformation aufweist, wobei jede Rechtsinformation einer jeweiligen Koppler-ID entspricht; und
durch das Smartgerät Kommunizieren (315) mit dem ersten Endgerät durch die BT-Verbindung gemäß der ersten Rechtsinformation.

5. Verfahren nach Anspruch 4, das ferner Folgendes aufweist:
durch das Smartgerät Empfangen (411) eines dritten Benutzerkontos eines dritten Endgeräts und einer Beteiliger-ID von dem Server und Einfügen des dritten Benutzerkontos und der Beteiliger-ID in die erste voreingestellte Zuordnungstabelle als ein Zuordnungsbeziehungssatz, wobei die Beteiliger-ID durch den Server gemäß einer Beteiligungsbeziehung unter der Geräte-ID, dem dritten Benutzerkonto und einer ersten Endgerät-ID erzeugt wird, wobei der Server das dritte Benutzerkonto des dritten Endgeräts und die Geräte-ID vom zweiten Endgerät empfängt, das die Kopplungsbeziehung mit dem Smartgerät herstellt, Abfrageinformationen gemäß dem dritten Benutzerkonto an das dritte Endgerät sendet, das dritte Benutzerkonto und die erste Endgerät-ID von dem dritten Endgerät empfängt, das als Antwort auf die Abfrageinformationen bestimmt, an der Beteiligung teilzunehmen, und die Beteiligungsbeziehung unter der Geräte-ID, dem dritten Benutzerkonto und der ersten Endgerät-ID herstellt.

6. BlueTooth-gestützte, abgekürzt als BT-gestützte, auf BT-fähiges Smartgerät angewandte Identitätserkennungsvorrichtung, **dadurch gekennzeichnet, dass** die Vorrichtung Folgendes aufweist:
ein erstes Herstellungsmodul (670), das zum Herstellen einer BT-Verbindung mit einem ersten Endgerät konfiguriert ist;
ein ID-Sendemodul (680), das konfiguriert ist zum Senden einer Geräte-ID des Smartgeräts an das erste Endgerät durch die BT-Verbindung, so dass das erste Endgerät die Geräte-ID, ein erstes Benutzerkonto des ersten Endgeräts und eine erste Endgerät-ID an einen Server sendet, um den Server zum Herstellen einer Kopplungsbeziehung unter der Geräte-ID, dem ersten Benutzerkonto und der ersten Endgerät-ID und zum Erzeugen einer Koppler-ID gemäß der Kopplungsbeziehung zu befähigen; und
ein erstes Einfügungsmodul (690), das konfiguriert ist zum Empfangen des ersten Benutzerkontos und der Koppler-ID vom Sender und zum Einfügen des ersten Benutzerkontos und der Koppler-ID in eine erste voreingestellte Zuordnungstabelle als ein Zuordnungsbeziehungssatz und wobei die erste voreingestellte Zuordnungstabelle eine Zuordnungsbeziehung zwischen wenigstens einem Benutzerkonto und wenigstens einer Koppler-ID aufweist, wobei jede Koppler-ID einem jeweiligen Benutzerkonto entspricht;
ein ID-Suchmodul (630), das konfiguriert ist zum Durchsuchen der ersten voreingestellten Zuordnungstabelle nach der Koppler-ID, die dem durch das erste Einfügungsmodul empfangenen ersten Benutzerkonto entspricht; und
ein Identitätsbestimmungsmodul (640), das konfiguriert ist zum Bestimmen einer Benutzeridentität, die dem ersten Endgerät entspricht, gemäß der durch das ID-Suchmodul gefundenen ersten ID.

7. Vorrichtung nach Anspruch 6, wobei die erste voreingestellte Zuordnungstabelle die Koppler-ID und die Beteiliger-ID von wenigstens zwei verschiedenen Ebenen aufweist,
die Koppler-ID und die Beteiliger-ID verschiedener Ebenen verschiedenen Rechtsinformationen entsprechen und die Ebenen der Koppler-ID und der Beteiliger-ID eine positive Korrelationsbeziehung mit Ebenen von Zugangsrechten haben, die durch die Rechtsinformationen angezeigt werden.

8. Vorrichtung nach Anspruch 7, wobei die Koppler-ID Kennungen (ID) sind, die Endgeräten entsprechen, die eine Kopplungsbeziehung mit dem Smartgerät herstellen, und die Beteiliger-ID Kennungen (ID) sind, die Endgeräten entsprechen, die eine Beteiligungsbeziehung mit dem Smartgerät herstellen.

9. Vorrichtung nach Anspruch 6, die ferner Folgendes aufweist:
ein Informationssuchmodul (650), das konfiguriert ist zum Durchsuchen einer zweiten voreingestellten Zuordnungstabelle nach ersten Rechtsinformationen, die der Koppler-ID entsprechen, wobei die zweite voreingestellte Zuordnungstabelle eine Zuordnungsbeziehung zwischen wenigstens einer Koppler-ID und wenigstens einer Rechtsinformation aufweist, wobei jede Rechtsinformation einer jeweiligen Koppler-ID entspricht; und
ein Kommunikationsmodul (660), das konfiguriert ist zum Kommunizieren mit dem ersten Endgerät durch die BT-Verbindung gemäß der ersten Rechtsinformation, die von dem Informationssuchmodul gefunden wurde.

10. Vorrichtung nach Anspruch 9, die ferner Folgendes aufweist:
ein zweites Einfügungsmodul (691), das konfiguriert ist zum Empfangen eines dritten Benutzerkontos eines dritten Endgeräts und einer Beteiliger-ID von dem Server und Einfügen des dritten Benutzerkontos und der Beteiliger-ID in die erste voreingestellte Zuordnungstabelle als ein Zuordnungsbeziehungssatz, wobei die Beteiliger-ID durch den Server gemäß einer Beteiligungsbeziehung unter der Geräte-ID, dem dritten Benutzerkonto und einer ersten Endgerät-ID erzeugt wird, wobei der Server das dritte Benutzerkonto des dritten Endgeräts und die Geräte-ID vom ersten Endgerät empfängt, das die Kopplungsbeziehung mit dem Smartgerät herstellt, Abfrageinformationen an das dritte Endgerät gemäß dem dritten Benutzerkonto sendet, das dritte Benutzerkonto und die erste Endgerät-ID von dem dritten Endgerät empfängt, das als Antwort auf die Abfrageinformationen bestimmt, an der Beteiligung teilzunehmen, und die Beteiligungsbeziehung unter der Geräte-ID, dem dritten Benutzerkonto und der ersten Endgerät-ID herstellt.

11. BlueTooth-gestützte, abgekürzt als BT-gestützte, auf BT-fähiges Smartgerät angewandte Identitätserkennungsvorrichtung, **dadurch gekennzeichnet, dass** die Vorrichtung Folgendes aufweist:
einen Prozessor (702); und
einen Speicher (704), der konfiguriert ist zum Speichern von durch den Prozessor ausführbaren Anweisungen, wobei der Prozessor konfiguriert ist zum:
Herstellen einer BT-Verbindung mit einem ersten Endgerät;
Senden einer Geräte-ID des BT-fähigen Smartgeräts an das erste Endgerät durch die BT-Verbindung, so dass das erste Endgerät die Geräte-ID, ein erstes Benutzerkonto des ersten Endgeräts und eine erste Endgerät-ID an den Server sendet, um den Server zum Herstellen einer Kopplungsbeziehung unter der Geräte-ID, dem ersten Benutzerkonto und der ersten Endgerät-ID und zum Erzeugen einer Koppler-ID gemäß der Kopplungsbeziehung zu befähigen; und
Empfangen des ersten Benutzerkontos und der Koppler-ID vom Sender und Einfügen des ersten Benutzerkontos und der Koppler-ID in eine erste voreingestellte Zuordnungstabelle als ein Zuordnungsbeziehungssatz und wobei die erste voreingestellte Zuordnungstabelle eine Zuordnungsbeziehung zwischen wenigstens einem Benutzerkonto und wenigstens einer Koppler-ID aufweist, wobei jede Koppler-ID einem jeweiligen Benutzerkonto entspricht; und
Durchsuchen der voreingestellten Zuordnungstabelle nach der Koppler-ID, die dem ersten Benutzerkonto entspricht; und
Bestimmen einer Benutzeridentität, die dem ersten Endgerät entspricht, gemäß der Koppler-ID.

12. Computerprogramm mit Anweisungen zum Ausführen der Schritte eines BlueTooth-gestützten, abgekürzt als BT-gestützten, Identitätserkennungsverfahrens nach einem der Ansprüche 1 bis 5, wenn das genannte Programm durch einen Computer ausgeführt wird.

13. Aufzeichnungsmedium, das durch einen Computer lesbar ist und auf dem ein Computerprogramm mit Anweisungen zum Ausführen der Schritte eines BlueTooth-gestützten, abgekürzt als BT-gestützten, Identitätserkennungsverfahrens nach einem der Ansprüche 1 bis 5 aufgezeichnet ist.

## Revendications

1. Procédé de reconnaissance d'identité basé BlueTooth, abrégé en basé BT, **caractérisé en ce que** le procédé comprend :
établir (301), par un équipement intelligent, une connexion BT avec un premier terminal ;
envoyer (302), par l'équipement intelligent, une ID équipement de l'équipement intelligent basé BT au premier terminal par la connexion BT ;
envoyer (304), par le premier terminal, l'ID équipement, un premier compte utilisateur du premier terminal et une ID du premier terminal à un serveur ;
établir (306), par le serveur, une relation de liaison parmi l'ID équipement, le premier compte utilisateur et l'ID du premier terminal et générer une ID lieur conformément à la relation de liaison ; et
recevoir (309), par l'équipement intelligent, le premier compte utilisateur et l'ID lieur du serveur, et ajouter le premier compte utilisateur et l'ID lieur dans une première table de mappage pré-établie en tant qu'un ensemble de relation de mappage, et la première table de mappage pré-établie comprenant une relation de mappage entre au moins un compte utilisateur et au moins une ID lieur, chaque ID lieur correspondant à un compte utilisateur respectif ; et
consulter (312), par l'équipement intelligent, la table de mappage pré-établie pour l'ID lieur correspondant au premier compte utilisateur ; et
déterminer (313), par l'équipement intelligent, une identité utilisateur correspondant au premier terminal conformément à l'ID lieur.

2. Procédé selon la revendication 1, dans lequel la première table de mappage pré-établie comprend les ID lieurs et des ID partageurs d'au moins deux niveaux différents,
les ID lieurs et les ID partageurs de niveaux différents correspondent à des informations de droits différents, et les niveaux des ID lieurs et des ID partageurs ont une relation de corrélation positive avec des niveaux de droits d'accès indiqués par les informations de droits.

3. Procédé selon la revendication 2, dans lequel les ID lieurs sont des ID correspondant à des terminaux qui établissent une relation de liaison avec l'équipement intelligent, et les ID partageurs sont des ID correspondant à des terminaux qui établissent une relation de partage avec l'équipement intelligent.

4. Procédé selon la revendication 2 ou 3, comprenant en outre :
consulter (314), par l'équipement intelligent, une deuxième table de mappage pré-établie pour de premières informations de droits correspondant à l'ID lieur, la deuxième table de mappage pré-établie comprenant une relation de mappage entre au moins une ID lieur et au moins un morceau d'informations de droits, chaque morceau d'informations de droits correspondant à une ID lieur respective ; et
communiquer (315), par l'équipement intelligent, avec le premier terminal par la connexion BT conformément aux première informations de droits.

5. Procédé selon la revendication 4, comprenant en outre :
recevoir (411), par l'équipement intelligent, un troisième compte utilisateur d'un troisième terminal et une ID lieur du serveur, et ajouter le troisième compte utilisateur et l'ID lieur dans la première table de mappage pré-établie en tant qu'un ensemble de relation de mappage, l'ID lieur étant générée par le serveur conformément à une relation de partage parmi l'ID équipement, le troisième compte utilisateur et une ID de premier terminal, où le serveur reçoit le troisième compte utilisateur du troisième terminal et l'ID équipement du deuxième terminal qui établit la relation de liaison avec l'équipement intelligent, envoie des informations d'interrogation au troisième terminal conformément au troisième compte utilisateur, reçoit le troisième compte utilisateur et l'ID du premier terminal du troisième terminal qui détermine de participer au partage en réponse aux informations d'interrogation, et établit la relation de partage parmi l'ID équipement, le troisième compte utilisateur et l'ID du premier terminal.

6. Dispositif de reconnaissance d'identité basé BlueTooth, abrégé en basé BT, appliqué à un équipement intelligent validé BT, **caractérisé en ce que** le dispositif comprend :
un premier module d'établissement (670) configuré pour établir une connexion BT avec un premier terminal ;
un module d'envoi d'ID (680) configuré pour envoyer une ID équipement de l'équipement intelligent au premier terminal par la connexion BT de telle sorte que le premier terminal envoie l'ID équipement, un premier compte utilisateur du premier terminal et une ID du premier terminal à un serveur, de manière à permettre au serveur d'établir une relation de liaison parmi l'ID équipement, le premier compte utilisateur et l'ID du premier terminal et de générer une ID lieur conformément à la relation de liaison ; et
un premier module d'addition (690) configuré pour recevoir le premier compte utilisateur et l'ID lieur du serveur, et ajouter le premier compte utilisateur et l'ID lieur dans une première table de mappage pré-établie en tant qu'un ensemble de relation de mappage, et la première table de mappage pré-établie comprenant une relation de mappage entre au moins un compte utilisateur et au moins une ID lieur, chaque ID lieur correspondant à un compte utilisateur respectif ;
un module de consultation d'ID (630) configuré pour consulter la première table de mappage pré-établie pour l'ID lieur correspondant au premier compte utilisateur reçu par le premier module d'addition ; et
une module de détermination d'identité (640) configuré pour déterminer une identité utilisateur correspondant au premier terminal conformément à la première ID trouvée par le module de consultation d'ID.

7. Dispositif selon la revendication 6, dans lequel la première table de mappage pré-établie comprend les ID lieurs et les ID partageurs d'au moins deux niveaux différents,
les ID lieurs et les ID partageurs de niveaux différents correspondent à des informations de droits différents, et les niveaux des ID lieurs et des ID partageurs ont une relation de corrélation positive avec des niveaux de droits d'accès indiqués par les informations de droits.

8. Dispositif selon la revendication 7, dans lequel les ID lieurs sont des ID correspondant à des terminaux qui établissent une relation de liaison avec l'équipement intelligent, et les ID partageurs sont des ID correspondant à des terminaux qui établissent une relation de partage avec l'équipement intelligent.

9. Dispositif selon la revendication 6, comprenant en outre :
un module de consultation d'informations (650) configuré pour consulter une deuxième table de mappage pré-établie pour de premières informations de droits correspondant à l'ID lieur, la deuxième table de mappage pré-établie comprenant une relation de mappage entre au moins une ID lieur et au moins un morceau d'informations de droits, chaque morceau d'informations de droits correspondant à une ID lieur respective ; et
un module de communication (660) configuré pour communiquer avec le premier terminal par la connexion BT conformément au premières informations de droits trouvées par le module de consultation d'informations.

10. Dispositif selon la revendication 9, comprenant en outre :
un deuxième module d'addition (691) configuré pour recevoir un troisième compte utilisateur d'un troisième terminal et une ID lieur du serveur, et ajouter le troisième compte utilisateur et l'ID lieur dans la première table de mappage pré-établie en tant qu'un ensemble de relation de mappage, l'ID lieur étant générée par le serveur conformément à une relation de partage parmi l'ID équipement, le troisième compte utilisateur et une ID de premier terminal, où le serveur reçoit le troisième compte utilisateur du troisième terminal et l'ID équipement du premier terminal qui établit la relation de liaison avec l'équipement intelligent, envoie des informations d'interrogation au troisième terminal conformément au troisième compte utilisateur, reçoit le troisième compte utilisateur et l'ID du premier terminal du troisième terminal qui détermine de participer au partage en réponse aux informations d'interrogation, et établit la relation de partage parmi l'ID équipement, le troisième compte utilisateur et l'ID du premier terminal.

11. Dispositif de reconnaissance d'identité basé BleuTooth, abrégé en basé BT, appliqué à un équipement intelligent validé BT, **caractérisé en ce que** le dispositif comprend :
un processeur (702) ; et
une mémoire (704) configurée pour stocker des instructions exécutables par le processeur, où le processeur est configuré pour :
établir une connexion BT avec un premier terminal ;
envoyer une ID équipement de l'équipement intelligent validé BT au premier terminal par la connexion BT de telle sorte que le premier terminal envoie l'ID équipement, un premier compte utilisateur du premier terminal et une ID du premier terminal au serveur, de manière à valider le serveur à établir une relation de liaison parmi l'ID équipement, le premier compte utilisateur et l'ID du premier terminal et générer une ID lieur conformément à la relation de liaison ; et
recevoir le premier compte utilisateur et l'ID lieur du serveur, et ajouter le premier compte utilisateur et l'ID lieur dans une première table de mappage pré-établie en tant qu'un ensemble de relation de mappage, et la première table de mappage pré-établie comprenant une relation de mappage entre au moins un compte utilisateur et au moins une ID lieur, chaque ID lieur correspondant à un compte utilisateur respectif ; et
consulter la table de mappage pré-établie pour l'ID lieur correspondant au premier compte utilisateur ; et
déterminer une identité utilisateur correspondant au premier terminal conformément à l'ID lieur.

12. Programme informatique comprenant des instructions pour exécuter les étapes d'un procédé de reconnaissance d'identité basé BlueTooth, abrégé en basé BT, selon l'une quelconque des revendications 1 à 5, lorsque ledit programme est exécuté par un ordinateur.

13. Support d'enregistrement lisible par un ordinateur et ayant enregistré dessus un programme informatique comprenant des instructions pour exécuter les étapes d'un procédé de reconnaissance d'identité basé BlueTooth, abrégé en basé BT, selon l'une quelconque des revendications 1 à 5.
